# EUROPEAN PATENT SPECIFICATION

(11) **EP 3 225 955 B1**
(45) Date of publication and mention of the grant of the patent: **02.12.2020**
(21) Application number: 17163431.4
(22) Date of filing: 28.03.2017
(51) Int. Cl.: G01D 4/00

(54) **AUTOMATED READER**
AUTOMATISCHER LESER
LECTEUR AUTOMATISÉ

(30) Priority: 29.03.2016 BE 201605221
(43) Date of publication of application: 04.10.2017
(73) Proprietor: JUNE ENERGY NV, 2140 Anvers (BE)
(72) Inventor: Lieben, Georges, 2018 Antwerpen (BE); De Winter, Mathias, 2000 Antwerpen (BE); Van den Bergh, Tim, 2020 Antwerpen (BE)
(74) Representative: Van hunsel, Lieven M.S.

(56) References cited:
- WO-A1-2007/067132
- US-B1- 6 853 309

## Description

The present invention relates to an automated reading device.

More specifically the present invention relates to an automated reading device for reading meter readouts of a measuring device, whereby the reading device is equipped with a detector with which images of the meter readout concerned can be made by optical means.

An automated reading device to which the invention relates is typically suitable for reading meter readouts of measuring devices such as electricity meters, gas meters or water meters, but it can also be used for other measuring devices.

In particular an automated reading device, to which the invention relates, is intended for reading meter readouts of analogue measuring devices and more specifically analogue measuring devices whereby the meter readout is shown by means of a register that consists of numbered dials that turn around an axis.

Hereby an image of the meter readout is automatically made, for example at regular times or on the instruction of an operator.

The image of the meter readout can be used for invoicing the consumption or similar.

One of the aims of such an automated reading device consists of replacing the expensive manual taking of the meter readings of older analogue measuring devices still present in large numbers, by a cheaper automated solution.

Another problem that now frequently occurs is that meter readings are generally only taken once per year, after which a total account is sent to the customer.

During the entire intervening period between two recordings of the meter readout, regular invoices are sent that are generally calculated as a fraction of the amount that corresponds to the consumption measured during the previous year.

As in reality more or less is consumed than in the previous year, upon the final account the customer must pay additional money or receive money, which can lead to very unpleasant surprises.

An automated reading device to which the invention relates attempts to provide a solution to this problem by the measurement of the meter readouts taking place automatically without problems, and this at regular points in time, for example monthly, weekly or in "real time", but with a shorter interval between two measurements than is currently usual.

It thus becomes possible to monitor the invoicing of the consumption of customers much more closely in order to avoid any payment problems at the end of the year in this way, as now frequently occurs.

Automated reading devices of the aforementioned type are already known, which are suitable for the aforementioned purposes, but they are highly open to improvement.

In order to enable a reading of a meter readout of a measuring device, such an automated reading device is fastened to a transparent panel of the measuring device.

With electricity meters for example it is also often the case that the actual electricity meter is installed in a closed and sealed cabinet with a transparent door, generally made of a transparent plastic, while the numbered dials or registers on which the meter readout is to be read is also mounted behind glass or Plexiglas in the actual measuring device.

A big problem with making an image with the detector of an automated reading device to which the invention relates is that the making of an image through one or more transparent layers, formed for example by a door of a meter cabinet or by a sight-glass of a measuring device, is accompanied by reflections and poor incident light, such that the quality of the images made cannot be guaranteed and thus the interpretation of the images of the meter readouts is possibly jeopardised.

Another problem that is of great importance in Belgium, for example, is that the distance between the meter readout on the measuring device and the place at which the reading device can be affixed can differ greatly from case to case, thus with highly different situations regarding incident light and reflections.

This makes it even more difficult to make images of the meter readouts in a standardised way and which also have a sufficiently high quality to enable an interpretation of the images.

According to the state of the art, automated reading devices are already known whereby it is attempted to provide a solution to the problem of reflections and the poor quality of the images.

Hereby a number of images of the meter readout are made shortly after one another, whereby different incident light or a different type of light is applied and whereby the necessary information for knowing the meter readout is obtained afterwards from the different images.

It goes without saying that such a solution is highly complicated, requires lots of resources for interpreting the multiple images and the conversion into a meter reading, whereby mistakes can also easily occur.

An earlier technology related to the same purpose is disclosed in US 6.853.309, which teaches an electronic image reader (9) associated to a supply meter (1), for example a water meter, for measuring and displaying a measured value in an optically readable manner. This image reader is adapted for being positioned or guided in guide systems above an inspection window (3) of the supply meter. The image reader (9) is provided with an optical system, that includes a lens (7), which is adapted to the optical configuration of the inspection window and to the optical situation, in particular the geometric position of a display (2) behind the inspection window. The supply meter includes an identification mark (12), which is also located in the region of a guide system, namely guide rails (6.2, 6.3), and which is arranged relative to the guide system such that it can be read with the image reader without changing its optical system.

Another known related technology is disclosed in WO 2007/067132, which discloses a method for obtaining a meter reading from a captured image (28) of a counter mechanism (3). The counter mechanism has at least one symbol position (10X), each being capable of showing a plurality of symbols (10) in sequential order so as to indicate respective values of said symbol position. Symbol image data (29) for the symbol position is derived from the image. The symbol image data is processed by matching with reference image data (34) representing said plurality of symbols to determine a current value of said symbol position. An output signal (39) representing said meter reading is generated from the current value determined for the or each symbol position. The reference image data (34) is provided as a first set of symbol templates (36) and a second set of symbol templates (38), and the processing of the symbol image data (29) involves a preprocessing stage (110) and a matching stage (120). The method involves selecting, based on an outcome of the preprocessing stage, at least one of the first and second sets of symbol templates (36, 38) for use during the matching stage.

The purpose of the present invention is also to provide a solution to one or more of the aforementioned and/or other problems.

More specifically the purpose of the invention is to provide an automated reading device for reading meter readouts of a measuring device that is suitable for making images of a meter readout in many circumstances.

Hereby an objective of the invention consists of designing such an automated reading device such that images of the meter readouts can be made in the aforementioned circumstances that are each of a sufficiently high quality to be directly converted into data or information by which the meter readout is known.

To this end the present invention concerns an automated reading device for reading meter readouts of a measuring device, whereby the reading device is provided with a detector with which images of the meter readout concerned can be made by optical means, and whereby the automated reading device is further at least provided with:
- light sources for emitting light;
- means for splitting the light emitted by the light sources into a number of light beams that extend along divergent directions; and,
- automated switching means that enable the light sources to be activated independently of one another and that enable the intensity of the emitted light to be controlled independently of one another, such that while making images of the meter readout a multitude of possible combinations of light beams can illuminate the meter readouts from divergent directions.

The multitude of lighting possibilities is useful for guaranteeing a good operation.

Indeed, many parameters such as the thickness of the Plexiglas or other layers between the reading device and the meter readout to be read, and any discolouring thereof in the course of time, variable external incident light, dust and similar are uncertain such that an arsenal of lighting options are necessary to guarantee the good operation.

By additionally providing the system with self-learning intelligence, optimum lighting can be obtained efficiently.

A great advantage of such an automated reading device according to the invention is that while reading or making an image of the meter readout, this meter readout is illuminated by a number of light beams that illuminate the meter readout in various ways from divergent directions.

Thus poor incident light and reflections during the making of an image of the meter readout are prevented, irrespective of the distance from the meter readout, at least within reasonable boundaries, that the automated reading device is affixed.

With such an automated reading device according to the invention, in the circumstances that are normal with measuring devices of which a meter reading must be taken, quality images of the meter readout are always made, such that an interpretation of the images can be done faultlessly.

Such an embodiment of an automated reading device according to the invention has the advantage that complex software and other resources such as digital memories and similar are no longer required for processing images that are successively made for the purpose of being able to retrieve the desired data.

In a possible embodiment of an automated reading device, when activating the light source or light sources, a number of light beams are emitted, whereby more specifically at least a first light beam is composed of light of a frequency that is within a first frequency range, and whereby at least a second light beam is composed of light of a frequency that is within a second different frequency range.

An advantage of such an embodiment of an automated reading device is that a clear image formation can be obtained of the meter readout, as no or practically no detrimental reflections can occur because simultaneous use is made of light beams that are incident on the meter readout from different directions and of which the light is in different frequency ranges.

An aforementioned frequency range can cover a proportion of the electromagnetic spectrum within the frequency range for light visible to the human eye (approximately 400 - 800 THz), but it can just as well cover other frequency ranges, for example corresponding to infrared light, ultraviolet light, and similar, etc.

In order to be able to realise an automated reading device, a number of light sources can be provided in the reading device that each emit light at a frequency within a different frequency range.

To this end, for example, a number of LED lights can be applied that each emit light of a different colour.

The convenience of such an embodiment of an automated reading device is that in addition to the light sources provided that each emit light of a different frequency, no other special facilities are needed such as filters and similar.

In another possible embodiment of an automated reading device, at least one light source is provided in the reading device whereby this light source emits light at a frequency within an umbrella frequency range and moreover means are provided for splitting light beams from the light emitted by this light source, whereby each light beam is composed of light at a frequency within a certain sub-range of the umbrella frequency range and whereby there is no overlap between the different sub-ranges.

A great advantage of this embodiment of an automated reading device is that a number of light beams can be created with only one light source, which illuminate the meter readout along divergent directions and whereby each of the light beams is formed by light of a frequency that differs from the frequencies of the light of the other light beams.

Thus energy can be saved for the supply of the light sources in the reading device.

Moreover, one single light source requires less space in the reading device than a number of light sources.

In another possible embodiment of an automated reading device different light beams are emitted during the illumination, whereby more specifically at least a first light beam is composed of light that is polarised according to a first plane and whereby at least a second light beam is composed of light that is polarised according to a second, different plane.

Such an embodiment of an automated reading device also has the advantage that reflections and poor incident light can be prevented in order to obtain images of the meter readout that are of a high quality, such as with the previous embodiments, whereby however this time use is made of a different technique with polarised light that can be more suitable in some applications.

With the intention of better showing the characteristics of the invention, a preferred embodiment of an automated reading device according to the invention is described hereinafter, by way of an example without any limiting nature, with reference to the accompanying drawings, wherein:
figure 1 shows a front view of a normal analogue electric measuring device with two meter readouts;
figure 2 schematically shows a cross-section through an electricity cabinet in which an electric measuring device is mounted, as shown in figure 1, (indicated by F1) and on which an automated reading device according to the invention is affixed; and,
figure 3 shows an exploded view in perspective of the automated reading device, shown by F3 in figure 2;
figure 4 shows a perspective view of the front of a cover indicated by F4 of the automated reading device of figure 3;
figure 5 shows a perspective view of the back of the same cover of figure 4; and,
figure 6 shows a cross-section through the cover of figures 4 and 5.

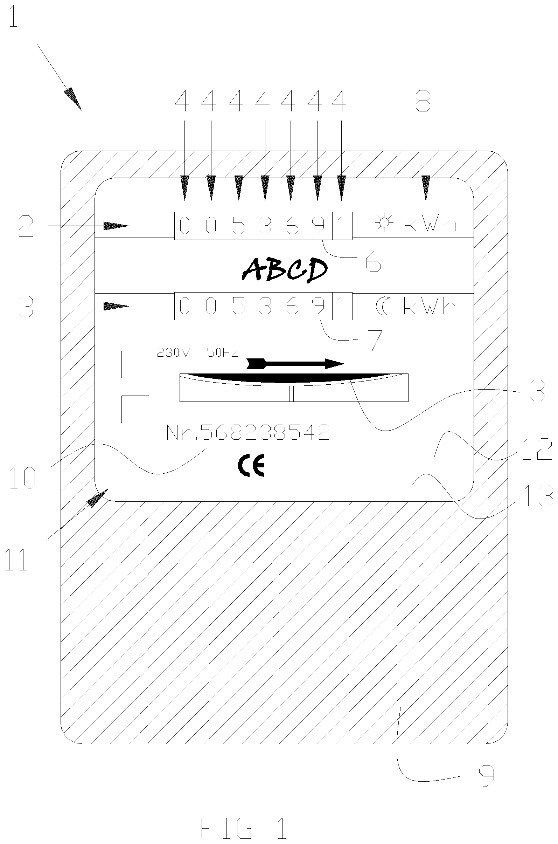

The known measuring device 1 shown in figure 1 is an electricity meter 1 of the analogue type that is provided with two registers 2 and 3, each formed by a row of numbered dials 4 arranged next to one another that are driven together by a measuring disk 5.

The numbers 6 and 7, composed of the visible figures on the numbered dials 4 arranged next to one another of the registers, present the electricity consumptions 6 and 7 measured with the measuring device 1.

The electricity consumption 6 that is to be read off from the top register 2 hereby shows the consumption during the day, while the electricity consumption 7 that is read off on the bottom register 3 shows the consumption during the night, whereby this consumption is invoiced at a different 'night rate'.

Both consumptions 6 and 7 are expressed in the measurement unit 8, which is usually kWh, which is shown on the meter face 9.

Moreover, the measuring device 1 is also provided with an identical meter number 10, whereby the identity of the measuring device 1 is recorded and which is also indicated on the meter face 9.

The meter readout 11 of the measuring device 1 can consist of all these data at a certain point in time, more specifically the electricity consumptions 6 and 7, the measurement units 8 and the meter number 10, but more or less data can form part of such a meter readout 11.

The section 12 of the meter face 9 on which the aforementioned data are read off is protected by means of a glass screen 13.

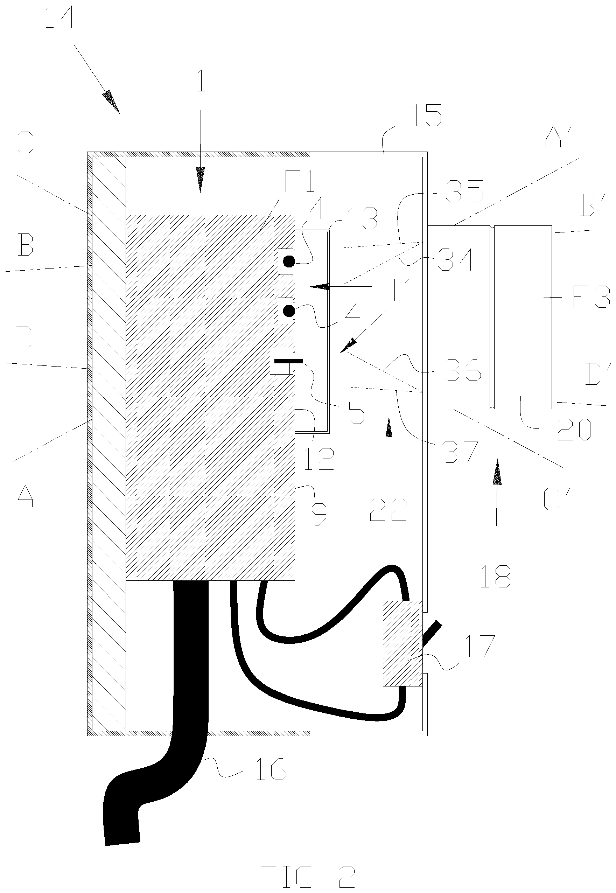

Figure 2 shows a typical situation, whereby an electricity meter 1, as shown in figure 1, is mounted in an electricity cabinet 14.

This electricity cabinet 14 is essentially made of plastic material and is provided with a transparent door 15.

Moreover supply cables 16 and one or more fuses 17 are connected to the electricity meter 1.

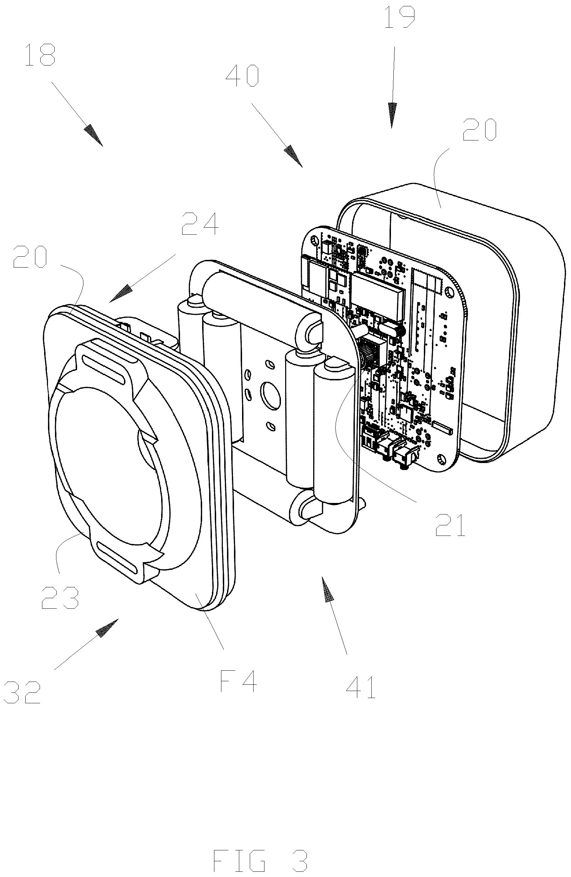

An automated reading device 18 according to the invention is fastened to the transparent door 15 of the electricity cabinet 14 with which the meter readouts 11 of the measuring device 1 can be read off, and which is shown in the exploded state in figure 3.

This reading device 18 is provided with a detector 19 with which images of the meter readout 11 concerned can be made by optical means, more specifically through the transparent door 15 and through the glass screen 13 of the meter face 9.

In this case, the automated reading device 18 is provided with a housing 20 to this end in which centrally one single light source 21 in the form of a LED light 21 for emitting light 22.

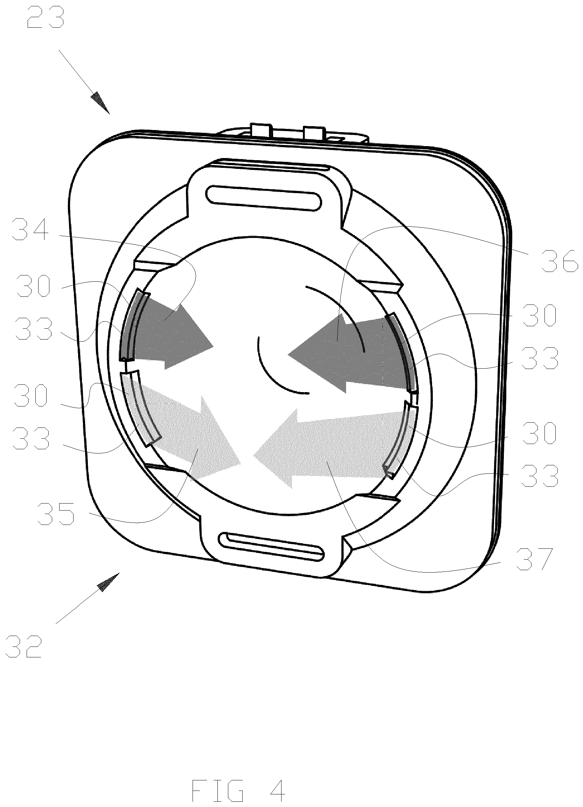

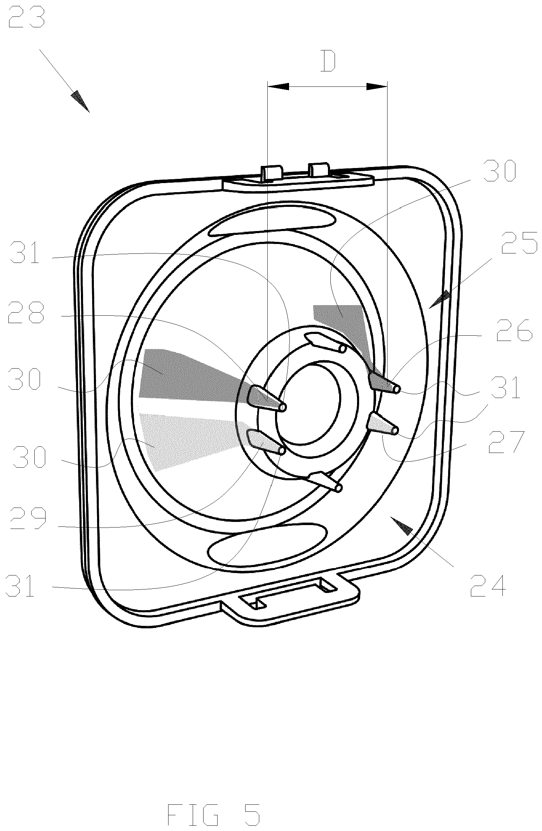

Moreover, the housing 20 comprises a cover 23, which is shown in more detail in figures 4 to 6 and which is provided on the inside with a number of protrusions 25 that extend towards the light source 21.

Four of these protrusions 25, more specifically protrusions 26, 27, 28 and 29 are transparent and hereby form a part of an optical guide 30 that consists of a section of the cover 23 that is made of transparent material.

Each such protrusion 26, 27, 28 and 29 is also provided with a first end 31 for the entry of light 22 emitted by the light source 21 in the optical guide 30 concerned.

Moreover, the optical guides 30 fan out radially in the cover 23 and on the outside 32 of the cover 23 the optical guides 30 are provided with a second end 33 for the exit of a light beam, respectively light beams 34, 35, 36 and 37, that are carried through the optical guides 30 concerned.

These light beams 34 to 37 are symbolically shown by means of arrows in figure 4.

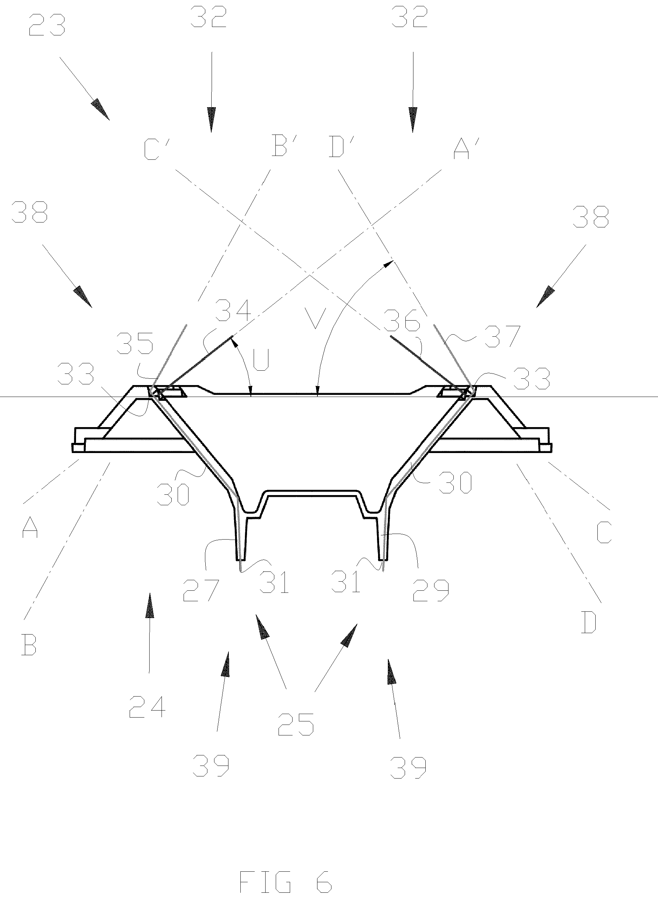

The purpose of the second end 33 of the optical guides 30 is also to direct such a light beam 34 to 37 to the meter readout 11 and this according to divergent directions, more specifically directions AA', BB', CC' and DD' respectively, shown by way of an example in figures 2 and 6.

These second ends 33 of the optical guides 30 thus form means 38 for focusing the light 22 emitted by the light source 21 into a number of light beams 34 to 37 that extend along divergent directions AA', BB' CC' and DD'.

In other embodiments of an automated reading device 18 according to the invention, other means can just as well be used for focusing the light 2 into light beams 34 to 37 and for directing them, and these means 38 can be controlled by automated switching means to thus enable the intensity and/or the transmission of the radiated light to controlled.

For example, mirrors, optical lenses, prisms, optical glass fibre cables and similar can be used.

According to the invention the optical guides 30 in the cover 23 are preferably formed of a plastic and this by means of extrusion.

The different optical guides 30 that form the protrusions 26 and 28 and the optical guides 30 that form the protrusions 27 and 29 are formed of a different transparent material.

The optical guides 30 concerned filter the light 22 originating from the light source 21 and this in a different way according to the case, more specifically with the intention of only allowing light 22 through in a certain frequency range.

Consequently the corresponding outgoing light beams 34 and 36 and the outgoing light beams 35 and 37 are composed of light 22 in a different frequency range.

The optical guides 30 thus also form means 39 for splitting light beams 34 to 37 from the light 22 emitted by the light source 21.

In other embodiments of an automated reading apparatus 18, according to the invention other means 39 can just as well be used for splitting light beams 34 to 37 from light 22, such as for example light filters, or optical polarisers, prisms and similar.

In general it can be said that according to the invention, a number of light beams from the automated reading device 18 preferably exit at different angles.

This is also the case in the embodiment shown in the drawings whereby more specifically the light beams 34 and 36 exit at an angle U with respect to the reading device 18, while the light beams 35 and 37 exit from the reading device 18 at an angle V.

In certain embodiments a number of light beams can exit the reading device 18 at places that are located at a certain distance D from one another.

This is also the case in the embodiment of the drawings whereby the light beams 34, 35 exit the reading device 18 at a location at a distance D from the place where the light beams 36 and 37 exit the reading device 18.

Additionally or alternatively, in some embodiments a number of light beams can exit the reading device 18 at locations that are adjacent to one another.

This is also the case in the embodiment of the drawings whereby the light beams 34, 35 exit the reading apparatus 18 at locations that are adjacent to one another. The same is the case for the light beams 36 and 37.

It is the intention that with an automated reading device 18 according to the invention, when making images of a meter readout 11 the light source 21, or in other embodiments the multiple light sources, are activated, such that multiple light beams 34 to 37 can illuminate the meter readout 11 simultaneously from divergent directions AA' to DD'.

To this end such an automated reading device 18 is provided with automated switching means 40 that can activate the light source 21, whereby the light source 21 is preferably only switched on when making images of the meter readout 11 in order to save energy.

In the case of the drawings the automated reading device 18 is also provided with batteries 41 that serve as an electrical supply and which enable the reading device to operate autonomously.

Moreover, the automated reading device 18 according to the invention is provided with means for storing digital images, means for converting the digital images into data and means for sending the data.

Hereby the means for converting digital images into data preferably consist of software for optical character recognition (OCR).

The means for sending the data are preferably able to send the data wirelessly, whereby for example use can be made of GSM technology or Bluetooth.

The invention is by no means limited to the embodiment of an automated reading device 18 according to the invention, described as an example and illustrated on the basis of the drawings, but such an automated reading device 18 according to the invention can be realised in other ways without departing from the scope of the invention, which is solely defined by the appended claims.

## Claims

1. Automated reading device (18) for reading meter readouts (11) of a measuring device (1), whereby the reading device (18) is provided with a detector (20) with which images of the meter readout (11) concerned can be made by optical means, **characterised in that** the automated reading device (18) is further at least provided with:
- light sources (21) for emitting light (22);
- means (38) for splitting the light (22) emitted by the light sources (21) into a number of light beams (34-37) that extend along divergent directions (AA' - DD'); and,
- automated switching means (40) that enable the light sources to be activated independently of one another and that enable the intensity of the emitted light to be controlled independently of one another, such that while making images of the meter readout (11) a multitude of possible combinations of light beams (34-37) can illuminate the meter readouts (11) from divergent directions (AA' - DD').

2. Automated reading device (18) according to claim 1, **characterised in that** the automated switching means (40) enable the light source (21) or light sources to be activated such that when making images of the meter readout (11) a number of light beams (34-37) can simultaneously illuminate the meter readouts (11) from divergent directions (AA'-DD').

3. Automated reading device (18) according to claim 1, **characterised in that** the aforementioned means (39) for splitting light beams (34-37) comprise an optical guide (30) formed by a transparent material.

4. Automated reading device (18) according to any one of the claims 1 to 2, **characterised in that** a number of light beams (34-37) exit the reading device (18) at places that are located at a certain distance (D) from one another.

5. Automated reading device (18) according to one or more of the claims 1, 2 or 4, **characterised in that** a number of light beams (34-37) exit the reading device (18) at locations that are adjacent to one another.

6. Automated reading device (18) according to one or more of the previous claims, **characterised in that** it is provided with means for the storage of digital images, means for the conversion of the digital images into data, and means for sending the data, whereby the means for converting digital images into data consist of software for optical character recognition (OCR) and whereby the means for sending the data enable the wireless sending of the data, whereby use is made of GSM technology or Bluetooth.

## Patentansprüche

1. Automatisierte Ablesevorrichtung (18) zum Ablesen von Zählerständen (11) eines Messgeräts (1), wobei die Ablesevorrichtung (18) mit einem Detektor (20) versehen ist, mit dem durch optische Mittel Bilder des betreffenden Zählerstandes (11) gemacht werden können, **dadurch gekennzeichnet, dass** die automatisierte Ablesevorrichtung (18) ferner zumindest versehen ist mit:
- Lichtquellen (21) zum Emittieren von Licht (22);
- Mitteln (38) zum Teilen des von den Lichtquellen (21) emittierten Lichts (22) in eine Anzahl von Lichtstrahlen (34-37), die sich entlang divergierender Richtungen (AA'-DD') erstrecken; und
- automatisierten Schaltmitteln (40), die es ermöglichen, die Lichtquellen unabhängig voneinander zu aktivieren und die Intensität des emittierten Lichts unabhängig voneinander zu steuern, so dass beim Erstellen von Bildern des Zählerstandes (11) eine Vielzahl von möglichen Kombinationen von Lichtstrahlen (34-37) die Zählerstände (11) aus divergierenden Richtungen (AA'-DD') beleuchten können.

2. Automatisierte Ablesevorrichtung (18) nach Anspruch 1, **dadurch gekennzeichnet, dass** die automatisierten Schaltmittel (40) es ermöglichen, die Lichtquelle (21) oder Lichtquellen so zu aktivieren, dass beim Erstellen von Bildern des Zählerstandes (11) eine Anzahl von Lichtstrahlen (34-37) die Zählerstände (11) gleichzeitig aus divergierenden Richtungen (AA'-DD') beleuchten können.

3. Automatisierte Ablesevorrichtung (18) nach Anspruch 1, **dadurch gekennzeichnet, dass** die vorgenannten Mittel (39) zum Teilen der Lichtstrahlen (34-37) eine optische Führung (30) umfassen, die aus einem transparenten Material gebildet ist.

4. Automatisierte Ablesevorrichtung (18) nach einem der Ansprüche 1 bis 2, **dadurch gekennzeichnet, dass** eine Anzahl von Lichtstrahlen (34-37) an Stellen, die sich in einem bestimmten Abstand (D) voneinander befinden, aus der Ablesevorrichtung (18) austreten.

5. Automatisierte Ablesevorrichtung (18) nach einem oder mehreren der Ansprüche 1, 2 oder 4, **dadurch gekennzeichnet, dass** eine Anzahl von Lichtstrahlen (34-37) an Stellen, die benachbart zueinander liegen, aus der Ablesevorrichtung (18) austreten.

6. Automatisierte Ablesevorrichtung (18) nach einem oder mehreren der vorhergehenden Ansprüche, **dadurch gekennzeichnet, dass** sie mit Mitteln zum Speichern von digitalen Bildern, Mitteln zum Umwandeln der digitalen Bilder in Daten und Mitteln zum Senden der Daten versehen ist, wobei die Mittel zum Umwandeln der digitalen Bilder in Daten aus Software zur optischen Zeichenerkennung (*optical character recognition,* OCR) bestehen und wobei die Mittel zum Senden der Daten das drahtlose Senden der Daten ermöglichen, wobei GSM-Technologie oder Bluetooth verwendet wird.

## Revendications

1. Dispositif de lecture automatisé (18) destiné à la lecture de cadrans de compteurs (11) d'un dispositif de mesure, dans lequel le dispositif de lecture (18) est équipé d'un détecteur (20) avec lequel des images du cadran de compteur concerné (11) peuvent être obtenues par l'intermédiaire d'un moyen optique, **caractérisé en ce que** le dispositif de lecture automatisé (18) est en outre au moins équipé :
- de sources de lumière (21) destinées à émettre de la lumière (22) ;
- de moyens (38) destinés à diviser la lumière (22) qui est émise par les sources de lumière (21) en un certain nombre de faisceaux de lumière (34-37) qui s'étendent dans des directions divergentes (AA' - DD') ; et
- de moyens de commutation automatisés (40) qui permettent d'activer les sources de lumière de manière respectivement indépendante et qui permettent de régler l'intensité de la lumière émise de manière respectivement indépendante, d'une manière telle que, au cours de la réalisation des images du cadran de compteur (11), une multitude de combinaisons possibles de faisceaux de lumière (34-37) peuvent éclairer les cadrans de compteur (11) à partir de directions divergentes (AA' - DD').

2. Dispositif de lecture automatisé (18) selon la revendication 1, **caractérisé en ce que** les moyens de commutation automatisés (40) permettent d'activer la source de lumière (21) ou des sources de lumière d'une manière telle que, au cours de la réalisation des images du cadran de compteur (11), un certain nombre de faisceaux de lumière (34-37) peuvent éclairer de manière simultanée les cadrans de compteur (11) à partir de directions divergentes (AA' - DD').

3. Dispositif de lecture automatisé (18) selon la revendication 1, **caractérisé en ce que** les moyens susmentionnés (39) destinés à diviser des faisceaux de lumière (34-37) comprennent un guide optique (30) réalisé à partir d'une matière transparente.

4. Dispositif de lecture automatisé (18) selon l'une quelconque des revendications 1 à 2, **caractérisé en ce qu'**un certain nombre de faisceaux de lumière (34-37) quittent le dispositif de lecture (18) à des endroits qui sont situés à une certaine distance (D) les uns des autres.

5. Dispositif de lecture automatisé (18) selon une ou plusieurs des revendications 1, 2 ou 4, **caractérisé en ce qu'**un certain nombre de faisceaux de lumière (34-37) quittent le dispositif de lecture (18) à des endroits qui sont adjacents les uns aux autres.

6. Dispositif de lecture automatisé (18) selon une ou plusieurs des revendications précédentes, **caractérisé en ce qu'**il est équipé de moyens qui sont destinés à la mise en mémoire d'images numériques, de moyens qui sont destinés à la conversion des images numériques en données et de moyens qui sont destinés à l'envoi des données, dans lequel les moyens destinés à la conversion d'images numériques en données sont constitués d'un logiciel pour une reconnaissance optique de caractères (OCR), et dans lequel les moyens destinés à l'envoi des données permettent l'envoi sans fil des données, dans lequel il est fait usage de la technologie GSM ou du Bluetooth.
